# EUROPEAN PATENT SPECIFICATION

(11) **EP 2 791 433 B1**
(45) Date of publication and mention of the grant of the patent: **27.06.2018**
(21) Application number: 12818550.1
(22) Date of filing: 14.12.2012
(51) Int. Cl.: E04B 1/76, E04B 1/80, E04C 2/296, E04F 13/08, E04F 13/18, E04C 2/40

(54) **INSULATION PANEL AND METHODS**
ISOLATIONSTAFEL UND VERFAHREN DAFÜR
PANNEAU D'ISOLATION ET PROCÉDÉS

(30) Priority: 15.12.2011 GB 201121553
(43) Date of publication of application: 22.10.2014
(73) Proprietor: EnvirUP Limited, Nottingham, Nottinghamshire NG7 3EN (GB)
(72) Inventor: ISHAQUE, Assim, Nottingham Nottinghamshire NG8 1LB (GB); SAJARD, Mohammad, Nottingham Nottinghamshire NG8 1JZ (GB)
(74) Representative: Avidity IP
(86) International application number: PCT/GB2012/053145
(87) International publication number: WO 2013/088168

(56) References cited:
- WO-A1-2005/108709
- DE-U- 1 958 267
- DE-U1-202007 007 407
- FR-A- 1 495 776
- FR-A1- 2 899 259
- JP-A- S6 421 164
- US-A- 3 797 190
- US-A1- 2001 013 211
- US-A1- 2007 044 416

## Description

This invention relates generally to insulation panels and more particularly a thermal insulation panel for the exterior and interior walls of a building and methods of installation and manufacture.

Most buildings suffer from heat loss through their walls due to being of solid wall construction, a lack of cavity wall insulation, inability of the building to have such systems retrofitted, or the sheer cost and complexity of fitting external wall insulation. The requirement for suitable weather conditions, high time and lack of skilled labour necessary to install currently available forms of wall insulation to existing housing stock is a reality resulting in low take up of this energy saving measure.

Current retrofit insulation systems are made up of various materials such as insulation boards, cementious layers, reinforcing layer, further cementious layer, followed by a decorative or colour coat, resulting in a multi layered system applied in situ, requiring highly skilled workers to apply them with installation times measured in weeks rather than days.

Current over cladding systems have such described issues due to their complexity in their manufacturing and installation processes which if installed incorrectly will affect the performance of the product; this is the unfortunate justification for the increase time and costs of such products.

The installers of currently available systems are required to be trained in a number of skilled trades, such as joinery, brickwork, dry lining, insulation, carpentry and plastering; which together add to the cost of training that installation companies have to fund, potentially reducing their willingness to fully train installers to competent standards leaving them with less than adequate training or substantially increasing the labour cost element of the installation resulting in higher cost of the exterior wall installation to the building owner.

Some elements of multi-layered exterior insulation systems require that they be installed in dry weather to stop the constituent materials becoming water damaged and allowing water porous layers to dry out before they can be relied upon to perform to specification; the consequence of this is that installers will not be able to install their particular system at certain periods of the year or during potentially unpredictable and unsuitable weather conditions, such as heavy rain, snow or high winds. Installers may in this instance take steps to install weatherproof coverings (such as scaffolding with weatherproof sheeting) around the building before they install, which will add to the cost and time to complete the installation process. The cementious layers also require the air temperature to be above defined cold temperatures, so that they can dry correctly; where if this is not the case, then installers will not be able to prepare and apply the cement until suitable weather conditions prevail

The complex nature of current insulated cover cladding systems mean they usually have to be permanently installed, adding to the cost and difficulty of making further changes, modifications and developments to the building as owners may later require.

The sheer cost of currently available systems for the average three bedroom detached house having financial payback periods of over decades (as calculated by dividing the total installation costs by the annual savings in heating costs derived from the having the system fitted) making them unaffordable and financially unattractive investments, unless significant government financial incentives are provided to subsidise the installation costs; requiring national governments to go through lengthy legislative processes to put such support in place and when there are alternative energy saving schemes with a quicker payback time.

With the cost of energy and gas rising at unprecedented levels above the rate of inflation and the effects of climate change becoming ever more apparent, governments and consumers alike want to reduce their heating costs. However when cost, installation time, weather risks and payback of current systems are taken into account, exterior and interior wall building insulation systems may not be as attractive as needed for mass take-up; the present invention solves these pressing issues as well as other significant shortcomings in a novel and non-obvious way which have not previously existed in the field.

JPS64021164A (IG Tech Res Inc) and US3797190 (Widdowson R) illustrate insulation panels with interconnections to form a barrier in the form of a stack for a building. The interconnections need skilled assembly to form a suitable barrier in use.

In accordance with aspects of the present invention there is provided an insulation panel for a building or structure as claimed in claim 1 below, a method of forming such an insulation panel as claimed in claim 11 below, and a method of providing an insulation surface to a building using such an insulation panel as claimed in claim 11 below. Other aspects of the present invention are defined in the dependent claims to claim 1 below.

Embodiments of aspects of the invention will now be described by way of example only and with reference to the accompanying drawings listed below:-
Figure 1 is a side view of an insulation panel according to aspects of the present invention;
Figure 2 is a front isometric view of the panel shown in figure 1 with insulation material within a cavity;
Figure 3 is a side view of two insulation panels tessellating together in abutment according to aspects of the invention;
Figure 4 is a front isometric view of the insulation panels depicted in figure 3;
Figure 5 is a rear isometric view of the two insulation panels depicted in figure 3 or figure 4 tessellating together in accordance with aspects of the present invention;
Figure 6 is an isometric front view of a window trim to be used in association with insulation panels in accordance with aspects of the present invention;
Figure 7 is a front isometric view of a trim assembly for a soil vent pipe and to be used in association with insulation panels in accordance with aspects of the present invention;
Figure 8 is a front isometric view of the trim assembly as depicted in figure 7 with a panel board cut to fit the box portion;
Figure 9 is a side view of a base or starter retainer trim used with regard to a first layer or row of insulation panels in accordance with aspects of the present invention;
Figure 10 is a front isometric view of the trim as depicted in figure 9; and,
Figure 11 is a side view of an assembly of an insulation panel and a base or starter retainer trim in accordance with aspects of the present invention.

Aspects of the present invention can provide the following benefits:-
a) The complete insulation panel can be mass produced offsite requiring and allowing installers to plan the installation, to cut the panels to fit the section of wall, affixation to the external wall and installation of trimmings sections.
b) The manufactured insulation panels are lightweight, robust and easy to transport from factory to site of installation.
c) The technological processes for manufacturing the panels are readily available and currently being used such as extrusion, injection moulding, pressure moulding or other such systems, thereby reducing the cost of production as manufacturers will simply need to order machinery to make the product of the given dimensions rather than invest in the design, development and testing or new technical processes for manufacturing the panels as described in the invention.
d) The installation of the external wall insulation panels as described in aspects the invention requires easily available tools to carry out the installation on to a given building, such as a mitre saw, electric drill, hammer, screwdriver, spirit level and scaffolding systems, reducing cost of investment in tools for potential installation contractors.
e) Installation methods and processes of the present system for a typical three bedroom house can be completed within five working days, with two trained installers, thus reducing the labour cost element of the installation in comparison to currently available external wall systems that are labour intensive due to the complex nature of the installation process which involves many layers and coverings including a cementitious layer requiring high skill levels to apply and almost perfect weather conditions.
f) The insulation panel described in accordance with aspects of the invention is designed in order to be installed in only one correct and precise manner, requiring persons from general construction trades to attend a short training course to become technically proficient in installing the insulation panels on a range of buildings which reduces the cost of training for installation contractors and thereby increases the business opportunity to more potentially installers which in term reduces the cost of high quality installations to the property owners.
g) The exterior element of the insulation panel is designed in a manner that allows it to be made from a range of virgin materials, and materials that are wholly recycled or contain recycled elements, reducing the costs and potentially, the carbon footprint of the installation, many of which are presently available and many more that are being developed by industrious scientists now and in the future.
h) The interior element of the insulation panel can be made up of lightweight thermally efficient material such as, phenolic foam, polyisocyanurate foam, polyurethane foam, bonded expanded polystyrene beads, or recycled non-toxic material such as crushed paper, cardboard or plastic bags, but also other such insulation materials that offer high performance insulation that are will be developed by other third parties in the future.
i) If the insulation panels used for installation are filled with either phenolic, polyisocyanurate, or polyurethane foams, the installation process can be completed in any weather conditions, as the panels are weather proof and cannot be damaged by wet or cold weather conditions.
j) The insulation panels can easily be cut to size and installed to fit around corners, crevices, window frames, door frames and angles of buildings making it suitable for all manner of installations, some of which will be finished with trimming pieces to cover final edges to ensure neat, tidy and sound completed installations. During the manufacturing process of the panel; in particular the front face can be shaped, contoured, coloured and embossed to create a range of designs suitable for a range of buildings it can be installed upon for an aesthetically and architecturally pleasing finish.
k) As the insulation panels described in accordance with aspects of the invention are installed by mechanical means such as but not limited to through drilled holes in a fastening flange and may be fitted with plastic wall plugs then weather resistant screws through the installation section of the panel, the panels could be removed at a later date to allow the property owners to change the building structure or even install new installation panels of new colour or design.
l) The installation system is sensitive to the building service pipes such as water, gas inlets and waste water outlet pipes, which can boxed in, filled with loose fill insulation or alternative material before being covered using panel boards that are manufactured to match the look of the insulation panels being installed.
m) The insulation panels will be equally suitable for a range of climates, providing insulation from the heat in the summer and insulation from the cold in the winter.
n) The insulation panel utilises materials that are currently available and used in the building industry that meet all relevant building standards, such as being fire retardant, weather resistant and being protected from degradation from ultraviolet rays.

It should be noted that the panels are shown in the figures are of shorter length than would be expected to fit the page so proportioning is not accurate but can be important with regard to proper presentation of the insulation panels in use. The panels are capable of being produced in any length as required and suitable for transportation and are likely to be manufactured in a length suitable for the width for the average home in the country of production.

An insulation panel in accordance with aspects of the present invention offers benefits which overcome some shortcomings of current systems.

An insulation panel presented according to aspects of the present invention considers the requirements for exterior wall insulation systems that require relatively low labour costs, short installation times, installed in almost any weather, on most types of buildings, provides high insulation performance and a significantly low cost system which creates an attractive payback period and aesthetically pleasing building facade for the consumer.

The panel relating to the invention is factory manufactured composite structure that provides weather proof insulation, that is modular in its form and quickly attaches directly to the building wall, is tessellating together with similar insulation panels attached either vertically, horizontally, or diagonally, thereby creating a weather proof exterior envelope around the existing building structure, irrespective of its shape, size and location in an aesthetically pleasing manner.

The insulation of the panel, which is capable of industrial, commercial and residential application, is created through the shape of the panel made from a thermoplastic polymer such as Polyvinyl chloride or alternative, the manner in which it closely connects with other panels. The thermal insulating value of the panel can be derived from any material with insulating properties such as expanding liquid foam, or bonded expanded polystyrene beads, but can also utilise recycled material which have thermal qualities and can also be used in the panel due to the unique characteristic of space between the panelling; for example plastic sheets or crushed newspaper will provide some level of thermal performance.

The panel as described in the invention is an encapsulated unit, which can be strengthened by horizontal internal bridging but an open cavity has advantages with regard to filling and loading with insulation material, capable of sealing the insulating material at every face of the structure, although it may be manufactured with no covering on the side facing of the panel; these can be connected together with a connecting over flange at any needed end during the installation process; the resulting installation is therefore impervious to moisture at all faces and unaffected by climatic conditions.

The panels are designed in such a manner that they can easily be installed by using mechanical means such as drilled holes in to the walls fitted with plastic wall plugs where the installation section of the panel will be drilled into which metal screws secure the panel onto the required wall of the building directly or on top of battens attached to the particular wall, where the panels are cut to fit corners, angles, around windows, doors and architectural elements of a building by relatively low skilled installers; once fitted with trimming sections, the installation will be neat, tidy, secure and perform as a highly insulating addition to the building structure.

The trimming sections will be the additional elements of the system that will allow the panels to be cut to fit the buildings walls allowing the edge of the panels to be covered, the corners to be neatly capped, the window and door frames to be neatly finished, preserving the thermal insulating capabilities of the system, keeping it weather tight and reducing any potential areas of thermal bridging.

The manufacture of the insulation panel uses existing manufacturing processes and the invention allows it to be created with a number of facades, colours, textures and designs; these may include panels in a matt black, gloss red, textured stone, shingles, light brown wood effect or plain white, with further adjustment to the shape of the outer face of the panel to have a contoured shape similar to a log cabin, tiled wall, brick or stone wall while maintaining full insulation properties, by changing the production mould or dye and changing the colour or aesthetically different materials the production process.

The completed structure forms a semi-permanent external insulation system that can be removed at any point or replaced as required, with very little impact on the building; this aspect of the invention allows for the building structure to be changed with little interruption from the insulation system.

The shape of the panel is designed to create an aesthetically pleasing weatherproof external envelope around the existing facade of the building being installed upon, allowing rainwater to run off, permitting moisture from the inside to escape but not allowing any moisture to enter the building facade.

The thermal properties of the panel is a function of its width from the back outwards and the depth from top to bottom, these two planes can be adjusted through the production process to create slim line panels of relatively modest insulation value all the way to much thicker and deeper panels that have much higher thermal values depending on client needs.

Although many insulating materials could be used, the most suitable materials are phenolic, polyisocyanurate, or polyurethane foam, which offer high insulation performance, strength, being light in weight, chemically stable and weather imperviable at feasible costs; these may be replaced as the material of choice by the development of new higher performance and lower cost insulant in the future which the invention could incorporate in the production process at that time.

The invention described herein can be seen as the base design having flexibility to allow the design to be adjusted to allow the thermal insulating capabilities to be varied to meet the specific demand of the local climate; for example by doubling the depth of the panel from back to front will increase the insulating capacity of the panel and by increasing the height of the panel from top to bottom, it will not only reduce the number of panels to be attached for a given area, but will also reduce the number of micro gaps that could allow heat to escape the original outer envelope through the insulated panels to the outer atmosphere.

Aspects of the present invention in particular provide the following advantages:-
**1.** A modular thermal insulation panel, which when affixed (fixed by fitting section of panel) to the exterior envelope of new or existing buildings of various surface materials, reduces the heat loss from the walls to the atmosphere, reducing the heating requirement of the installed building in colder temperature and in warmer temperature will reduce the thermal gain into the building from the outside temperature thereby reducing the need to employ comfort cooling systems.
**2.** The two key components of the panel are the extruded or injection moulded material to form the complete front visible surface being the; top of panel with slope, bottom of panel with slope, rear of panel and rear back recess for panel fitment and incorporating the mounting methodology and rear airflow and condensation cavity all in one piece which is then filled with the insulation material mentioned above, which will create a solid and stable structure for installation on given buildings.
**3.** The panel has a number of horizontally manufactured screw slots as a guide on the fitting section, giving the installer the ability to choose which slot to drill through to make the appropriate hole to place the mechanical fixing for easy installation but may also be predrilled at the point of manufacture with holes to allow the installer to use for fitting, this is overlapped by the panel above whose rear face has an indent in the design to allow for the protrusion of the mechanical fixings.
**4.** The insulating panel is manufactured offsite together with additional trimming and finishing strips, requiring installers to merely measure, cut and attach the panels and trimmings on their client's building so that the final installation is completed with little mess and with generally available tools such as a mitre saw, electric drill, spirit level, hammer and screw drivers.
**5.** The manufactured panel is lightweight and robust making it easy to transport large quantities of the finished panels in fully loaded long trucking containers to the installer's storage area or the site of installation.
**6.** The materials that will form the-shape of the insulating panels are a range of weather proof organic and inorganic plastic like materials such as polyvinyl chloride, plant based cellulose alternatives, recycled plastics or wood fibre and plastic mix materials that create a weatherproof, long lasting and maintenance free installation capable of being produced in a variety of colours, textures, effects to suit local property requirements and current styles.
**7.** The interior insulation filling material of the panel is made from materials that embody high thermal efficiency for a given volume, capable of being made to fit into any given space through mechanical delivery mechanism; for example this can include but is not limited to manufactured insulation foam boards cut to fit the cavity, expanded bonded polystyrene beads or expanding spray foam that is delivered as liquid into any given space then expands and solidifies into the given cavity; the material could also be a moulded polystyrene foam that fits within the structure, the internal material could also be recycled paper, cardboard, polyethylene sheeting, recycled plastic bags, recycled fabric (particularly suitable for developing countries) or insulating material currently being developed by third parties unconnected with this invention.
**8.** Features of the design outline shape looking at the side profile of the panel :
   a. A front surface of a panel with a slope or top edge: The top face or edge of the panel is at a slight angle (more than 90 degrees from the upward flange of the panel) ensuring any moisture making contact with the front face of the panel cannot enter into the installation and if any condensation does form between connected panels it runs down and out of the installation rather than be drawn in toward the building.
   b. A stability groove or grip recess on the top edge of panel with a slope: The stability groove on the top of the panel with slope allows the panel affixed above this panel to be connected or in keyed engagement to the panel below by receiving the protrusion at the bottom of the panel to be attached above, for the following reasons: firstly ensuring that each panel is tightly fitted to panels above and below, secondly ensuring that once the panels are affixed to the wall they form a firm fixture that is not easily unfixed from the building by natural forces such as driving rain, wind, the weight of snow or persons uninvited to do so, unless required by the homeowner or persons maintaining the property.
   *c*. A protrusion or rail on the bottom face of the panel: Protrusion on the bottom face of the panel allows for each panel to make a connection to the panel fitted below, for the purposes of stability as in point (b) above.
   d. A bottom edge of the panel with slope: The shape of the bottom edge face of the panel is angled downwards away from the rear face and generally reciprocal in angle to the top edge, creating tessellation with the panel fitted below, preventing any moisture from entering the system from outside and helping to conduct any moisture or water vapour out of the system that may originate from within the building.
   e. An overlay or step: The downward flange step on the front face or surface of the panel is designed to prevent any moisture from outside of the insulation system into the exterior envelope of the building causing it to run along the outside face of the insulation system to the bottom where it lands on the exterior ground floor away from the building; if the insulation system settles, shrinks or moves over time, this flange allows for the panels to remain with a neat and tidy appearance; the flange also creates a decorative edge; together with the stability groove and insertions points on panels above and below holds the panel with the correct distance from the wall they are affixed to; it can also be changed in proportions for aesthetic reasons.
   f. A fastening flange or fitting section of panel: Used for connecting to an exterior wall of a building is the flange or section of the panel that is used to connect the length of the panel to the wall or alternative mounting system that is employed, by using mechanical means such as screws with wall plugs or plastic nails through horizontally manufactured screw slits on the flange which can also be shaped to connect to vertical battens directly affixed to the external wall of the building to which the insulation panel is to be installed. The panel hangs from and about the fastening flange.
   g. Normally a rear or back surface of the panel has a recess at the bottom: the recess is at the rear of the panel and allows flush fitting against the panel previously fitted below allowing space for the previously fitted or fastening flange and the protrusion of the mechanical fixings used to secure the panel on the wall or batons affixed to the wall.
   h. Tessellating shape of the panel ensures that after the first insulation panel is affixed to the wall correctly with due care and attention to be at a 90 degree horizontal plane against the vertical line of building, that all other subsequent panels are easily installed and remain in parallel with the bottom panel.
   i. The top edge of the panel with slope 3 prevents water, snow and moisture from the outside flowing into the connected panels and is reciprocally shaped so is in parallel with the slope of the bottom edge face of the panel, forming a tessellating shape with the panel that may be affixed below when in a stack secured to a wall.
   j. Rear air and moisture vents can be provided: aspects of the invention may include rear air and moisture vents if necessary for the climate the panel is being installed in, allowing any moisture or water vapour that can escape from the internal to external envelope of the building into the gap between the wall and rear of the panel and to provide an escape route for such vapours out to the top of the insulation system, without escaping through the gaps within or between edges of the panels.
   k. Where provided connecting bridging such as elements within the panel structure along the horizontal plane of the profile can help maintain its structural integrity and becomes especially important for deeper and larger panels that may be heavier due to the weight of the insulation contents within the cavity and structure itself. More bridges can be added in the manufacturing process.
**9.** The fitting section or fastening flange of the panel that is used to connect the panel to the wall will be through direct connection of the panel by mechanical means such as drilled holes into the mortar between bricks, at suitable diameter and depth to hold a plastic wall plug into which a screw will be attached through the hole in the back flange, with the plastic plug and screw fixing being in a non-insulated portion of the panel so with minimal thermal bridging reducing insulation properties of the panel. The panels may also be affixed to the wall being connected to a vertical batten affixed to the wall with mechanical fixings allowing the panels to be clipped to a batten which has a receptacle that allows the top panel to be connected into or by simple mechanical fixings beings screwed through the holes in the top of the panel and into the panel. It will be appreciated although described in part as a top edge and a bottom edge in some installation the edges can be at a diagonal angle or the top edge as described below the bottom edge and the bottom edge as described above the top edge.
**10.** The structure of the panel allows it to be easily fitted in new buildings during the construction process or on existing buildings as part of an upgrade to the insulation, regular planned maintenance or redevelopment process.
**11.** The production process for a panel in accordance with aspects of the present invention is through a thermoplastic extrusion, injection moulding or any other process whereby the raw material (polyvinyl chloride, cellulose based thermoplastic, recycled plastic chips or wood fibre and plastic mix or material not yet defined) are heated and pushed through a metal die that defines the shape of the panel, which is cooled, insulation material added and cut to the required length for ease of storage and transportation.
**12.** Longevity of the system derives from the inert and stable nature of the materials used to produce the panels, such as virgin polyvinyl chloride, recycled polyvinyl chloride, recycled plastics and cellulose based plastics together with the expanded polystyrene core which makes the panel impervious to water and outdoor atmospheric conditions, even surviving liquids that are considered corrosive or caustic to metals that are normally kept within a home, leaving the installed system to remain in service for considerable number of years with no more than an annual check to remove any residues of dirt and grease from the atmosphere, although the panels will not suffer if this is not carried out.
**13.** The invention creates a new, maintenance free and updated attractive external envelope for the building to be installed through the process of receiving the external insulation where the system allows a vast number of options for creative design to be applied to the face of the panel, such as application of colour foils, using raw materials that are coloured, applying embossing upon the front face of the panel or edging such as wood grain, brick effect, stone textures, tile design effects similar to wood, ceramic or alternative, adding decorative designs within the panel to using relief, embossing our moulding or any combination of the above. The front surface will be have such decorative coatings or be receptive to such coatings by nature or treatment.
**14.** The basic structure and outer face of the invention as well as process of applying thin coloured foils to the panel allows for the shape of the panel to be made into differing structures for decorative effect, design functionality or ease of installation, such as smaller blocks that connect with panels below and either side with or without the flange to connect to the wall, or square, rectangular, triangular or similar tessellating shape with or without shaped and textured front face and edges.

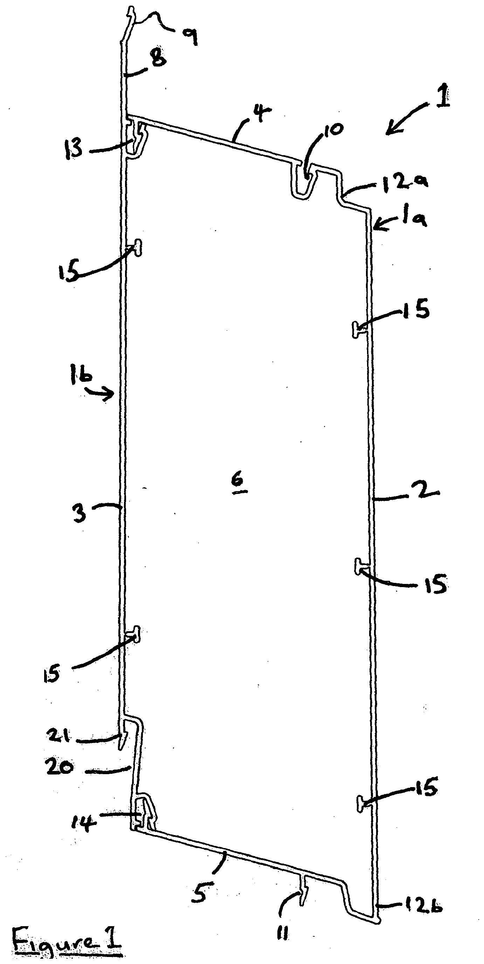

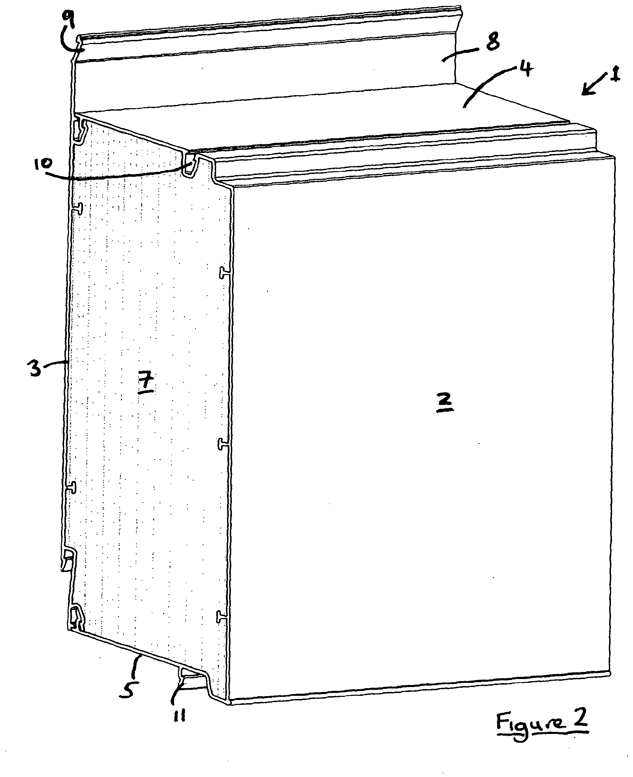

As indicated above the present invention as depicted in figure 1 and figure 2 in particular at a base level comprises an insulation panel 1 in which a front surface 2, a rear surface 3, a top edge or end 4 and a bottom edge or end 5 define a cavity 6. The cavity 6 in use will contain insulation material 7 (figure 2) as described above. Above the rear surface 3 and substantially contiguous in a common plane to the rear surface 3 is a fastening strip or flange 8 with typically an end feature 9 to receive a fastening such as a nail or screw so that the insulation panel 1 in use can be secured to and hung upon a surface of a building particularly without penetrating the cavity 6. It also be understood that an adhesive/sealant could be used upon the building facing side of the flange 8 to at least augment the hanging of the panel by fastenings through the flange 8.

The top edge or end 4 and bottom edge or end 5 are reciprocally shaped so that the angle of slope, length and other features are substantially reciprocal images of each other except with regard to location or keying features 10, 11 which inter-engage with each other and a stepped or lip front most configuration 12 with shaping 12a, 12b to act as a wet and/or weather lip for an association of panels 1 in use in a stack edge to edge 4, 5 about a joint between them. In such circumstances when the edges 4, 5 are arranged in abutment the slopes of the edges 4, 5 mean that water egress towards the rear of the panel 1 is restricted by a need for action against gravity. The depth of the insulation panel 1 will be defined to provide adequate space for the insulation material 7 and so thermal insulation function but also sound proofing if that is a factor. The keying features 10, 11 will help lock the panel to panel association towards a front side of an assembly and as illustrated will tend to take the form of an interference fit between a strip or rail 11 and a grip recess 10.

Insulation panels 1 in accordance with aspects of the present invention form a cavity 6 from generally two parts 1a, 1b to allow an extrusion or moulding process and method to be conveniently used. Thus parts 1a, 1b will be appropriately formed to provide respectively in one part 1a the front surface 2 and edges 4, 5 whilst in the other part 1b the rear surface is formed with appropriate interference and normally snap fit structures 13, 14 to hold the parts 1a, 1b together to form a structural panel 1 in use which will normally be reinforced by the injection and location of the insulation material 7 (figure 2) when dry or cured or located. Normally the parts 1a, 1b will be formed then assembled together then the insulation material 7 located in the cavity 6 as required before final processes such as adding closure trim for cavity 6 ends and boxing around features such as down pipes and windows as described later.

Within the cavity 6 it will be noted that keying or locating interference elements or features 15 are normally provided so that the insulation material is keyed and anchored within the cavity in use. In such circumstances the insulation material may not move as much with thermal cycling and aging whilst the panel 1 is secured to a building structure. As described above the cavity 6 may also have reinforcing structures which extend across the cavity typically between internal sides of the surfaces 2, 3 but also possibly to brace corners and other parts of the insulation panel 1 to provide structural integrity. These reinforcing structures will act with features 15 to again stabilise the insulation material in use and provide more performance sustainability for the panel 1 in use. In any event the features 15 as well as reinforcing structures will act within the insulation material 7 will act to hold the insulation material in constant connection with the interiors of the panels front face 2 and rear face 1a.

The materials used to provide the parts 1a, 1b and insulation material 7 are described above and generally the same materials will be used for both parts 1a, 1b for ease of specification and manufacture. It will be understood with such consistency of materials that issues of variations in physical performance e.g. variation in expansion and contraction will be at least reduced. However, it will be understood where possibly greater specification of materials may give better performance then different materials may be used. For example it will be understood that the front or outer part 1a will be exposed to more weathering than substantially protected or sheltered part 1b so a material more suited to such weathering may be chosen for part 1a compared to part 1b which will provide more of the basic structural strength and anchoring to a wall surface of a building in use. It will also be noted that the front surface 2 will be essentially that presented externally when in use as a stack of panels attached to a building as insulation cladding so the surface 2 at least of the part 1a may be rendered decorative in terms of colour and/or texture or made more receptive to application of coatings and treatments to provide such decorative features.

The fastening flange 8 is a core feature of aspects of the present invention. The flange allows the panel 1 to hang and be appropriately presented without fastenings passing through the cavity 6 including insulation materials 7. Such fastenings would provide thermal bridges and also transmission paths for moisture towards the surface of the building which may manifest itself as damp patches within in the building and possibly thermal ice fretting/erosion at the fastening attachment site to the building structure. The flange 8 is sufficiently strong to take the weight of the panel 1, is configured in the panel 1 when formed such that when assembled with other panels 1 in use the flange 8 and so fastenings are covered and protected from weathering/moisture. The flange 8 may be thicker than the other wall parts - surfaces 2, 3 and ends/edges 4, 5 to provide the desired strength. The flange 8 will normally be co-extruded with a part of the panel 1 so will be formed of the same material. In such circumstances the fastening flange 8 will be substantially rigid as with the remainder of the panel 1 to form the cavity 6. As an alternative the flange 8 may be more flexible to allow pivoting about the flange 8 in use which may help installation and maintenance but even if flexible the flange will not extend so that a degree of structural surety of position is provided - the panel 1 even with the weight of insulation material will not sag or significantly shift in use at least over a relatively short period of time of a few years.

The insulation material provides the function of the panel 1. Normally as described above a building surveyed prior to assembly and installation of panels 1. In such circumstances the panels 1 will normally be formed off-site and may be of standard sizes and widths so that the number of extrusion dies and moulds needed by a manufacturer is limited to acceptable numbers. The insulation material may be foam or fibrous material and will be located or injected into the cavity 6. The insulation material 7 is normally stabilised to provide a structural block within the cavity 6 by nature or drying/curing of the material itself or a binding component mixed with insulation material. The panel 1 may be initially formed to provide the cavity 6 then located in a constraint jig or mould when the insulation material is located or injected into the cavity so the substantive structural integrity of the panel 1 is maintained. However, even though the formed panel parts 1a, 1b along with insulation material may be relatively light in weight the manipulation of large lengths of panels 1 in use may be difficult. It will be appreciated that a desire as outlined above is ease of installation and assembly of panels 1 in a stack to the exterior of a building so the need for specialist handling and lifting machinery may be contrary to this desired approach. One solution is to assemble the panels 1 to a building structure with the cavity empty or only partially filled with insulation material so that the remainder of the insulation material can be located or injected on site to individual requirements and tastes but it will be appreciated in such circumstances care must be taken so that the panel does not unduly deform or bulge. Such an approach may also be used to facilitate the abutment and location of the edges 4, 5 into association in that the strip or rib 11 in the bottom edge or end 5 may be forced into better association with the grip cavity 10 of a top edge or end 4 in the panel 1 below by inherent flexing as the insulation material is forced into the cavity 6. The insulation material 7 may be under slight compression in any event to aid location retention in the cavity.

As indicated above the fastening flange 8 allows the panel 1 to essentially hang down from fastenings though to a wall of a structure or building. In such circumstances the flange 8 and the rear surface 3 are substantially contiguous.The flange 8 has sufficient width particularly if substantially rigid so the flange 8 can ensure orientation and presentation of the panel 1 against the wall. It will be understood that normally the cavity 6 and panel 1 will be flat so the surface 3 will also be flat however it may be envisaged that the cavity 6 may be shaped for some reason but even with such shaping the rear surface 3 on the side against a building or structure will be flat. The cavity may be shaped for example with a wavy inner side to one or both of the surfaces 2, 3 to stabilise the insulation material therein or to provide some form of acoustic dampening as well as thermal insulation.

As described above the actual fastenings used to secure the panels 1 may be of a wide number of types including nails, screws and bolts. In order to provide reinforcement and further sealing the fastening flange 8 may include positions such as pre-prepared holes and donut rings and/or markings where fasteners should be located and used for proper installation of the panel 1 in use. It will be understood these positions may be determined upon manufacture of the standard panel or when a bespoke panel is specified then formed or cut. The positions may also be standard based upon the panel size and dimension and possibly with variations for the type of insulation material in or to be filled into the cavity and/or the type of surface of structure or building to which the insulation panel 1 will be fixed in use. The flange 8 as indicated above may be simply thicker that other parts of the panel 1 so rebated and chamfered holes may be cut to locate a screw or nail positions.

The fastening flange 8 will usually have a uniform width along the length of the panel 1 as this will be the easiest to manufacture by extrusion and moulding. The width as outlined above will normally be in proportion to the width of the panel 1 in terms of the front surface 2 and/or rear surface 3. It will be understood that the fastening flange 8 is to a degree exposed so may be damaged in storage and/or transportation to an installation site so care must be taken with its exposure to such damage. Although not ideal the top edge 4 or end may be formed as a separate and detachable strip secured by adhesive or otherwise to the remainder of the panel 1. In such circumstances a reciprocal bottom edge 5 or end strip may be formed and transported as a kit with in use abutment surfaces against each other to protect the flange 8 and possibly in a shell formed by the parts 1a, 1b to create the front surface 2 and back or rear surface 3 of the panel in use. The detachable edges 4, 5 could be secured to cavity sections of a panel of different widths.

The top edge 4 and bottom edge 5 are reciprocally shaped so with a set of panels regularly formed in such a manner the edges 4, 5 can abut each other in an assembled stack. The abutment surfaces of the top edge 4 and the bottom edge 5 are normally angled so that the angle in each is substantially consistent to the plane of the front surface 2 and the rear surface 3. An angle upward from front to back will provide an incline inhibiting rain and other moisture flow and wicking towards the rear and so the building or structure clad in the insulating panels 1. Such resistance may also be enhanced with lateral ribs and waves in the opposed abutment surfaces of the ends by reciprocal concave and convex shaping. In some circumstances it may also be possible to provide ends themselves which have reciprocally respective concave and convex surfaces. Nevertheless normally for ease of manufacture the ends will be flat and at an angle for simplicity of design and formation. The top 4 and bottom 5 ends are then formed from separate elements which are assembled with the remainder of the panel on site or otherwise as required but this again may introduce complexity which it may be desirable to avoid so advantageously the top edge and/or the bottom edge may be integrally formed by moulding or extrusion or other processes as described above.

The front panel part 1a or surface 2 may have a lip or step 12b which extends beyond the lower edge of the panel 1. This will act to constraint outward deflection of the panel 1 in use generally mainly hung and secured by the fastening flange 8. However, also provided in the rear surface 3 is a recess 20 which may include a clip like arrangement 21 to engage in use the fastener portion 9 of the flange 8 to again provide some locational security and prevent outward deflection about the fastening flange 8 at the other end of the panel 1. The panel 1 in use should stay relatively flat and against a surface of a building or structure.

To provide additional strength should it be required as indicated above permanent and/or temporary brace elements may be provided to give reinforcement where required. These brace elements may be internal or external particularly at the junctions of the parts 1a, 1b to form the panel 1 and cavity 6. The brace elements formed and acting as separable elements can be made of other materials and thicknesses than that of the parts 1a, 1b whose structure may be constrained by the possibilities of moulding or extrusion or similar processes. In such circumstances tongue and groove type interference associations to form the cavity 6 and achievable by such forming processes can be reinforced by the brace elements. The joints may also be strengthened by adhesives and as indicated above the location and insertion of the insulating material.

It will be understood that the cavity 6 is generally closed to protect the insulation material 7 from weathering and to inhibit loosening. It will be understood that should the insulation material 7 become wet it will lose at least some of its thermal insulation properties and may swell bursting/cracking the panel 1. Trim elements will be used to provide such closure of the cavity 6. As will be described later such trim elements will also enable the panel to be adapted to accommodate such structures and features as down pipes and windows.

In some circumstances it may be desirable to provide some sort of heat indicative feature in the panel so that heat loss or gain can be seen. For example, if the panel where used to provide insulation to a shed in which temperature sensitive materials are stored, if the insulation material and/or parts of the front surface and possibly the rear surface forming the panel included a heat sensitive constituent and/or moisture colour change constituent, then an indication of the current status of the building for storage or occupation would be provided by the heat indicative feature. A moisture sensitive constituent which changes colour with moisture level may be included.

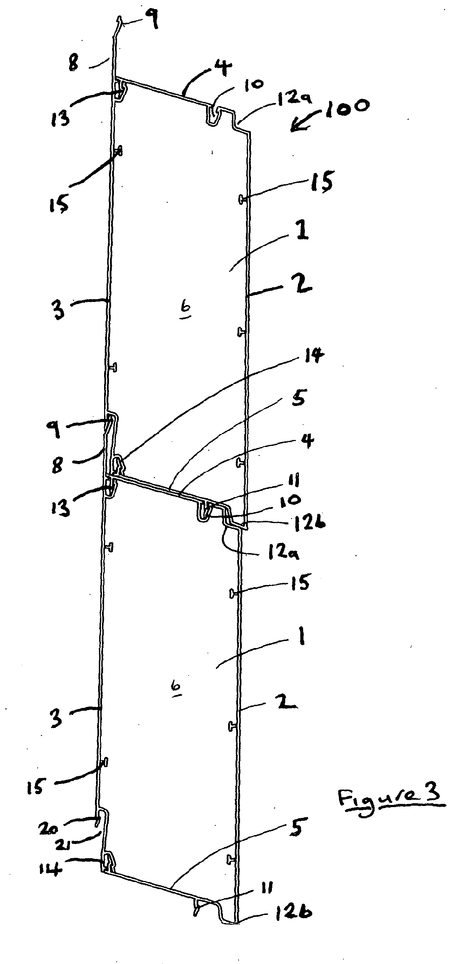

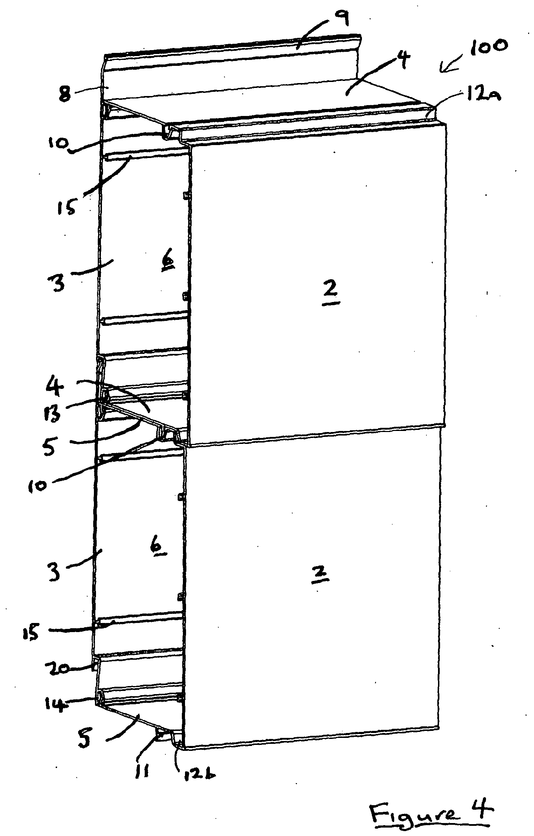

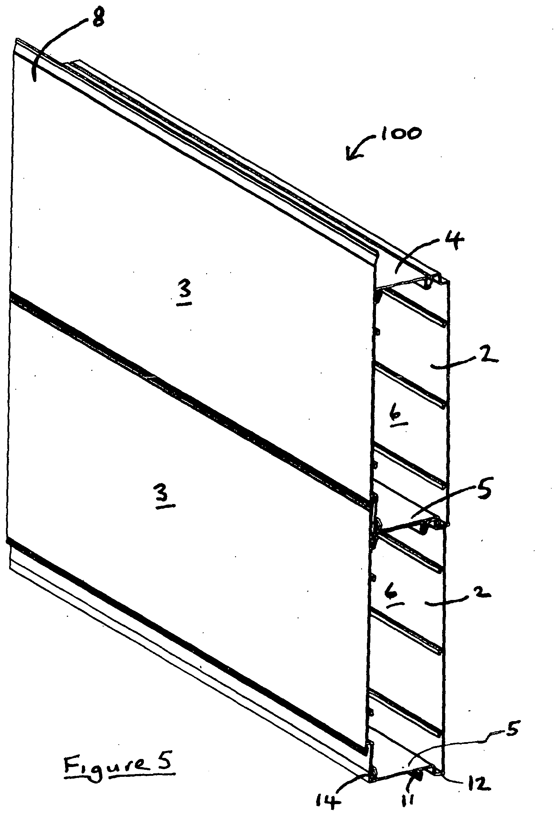

The insulation panels 1 of the present invention are designed to form cladding to a building so are assembled as a stack 100 one upon the other or side by side as illustrated in figures 3 to 5. It will be understood that stack assembly 100 comprising many layers of panels 1 will be provided to cover a building or structure from near the base to the eves. Each insulation panel 1 is as described previously so in the example shown fastening flanges 8 are secured by fasteners to a wall surface of a building or structure. Top end or edges 4 abuts the bottom end or edges 5 of the panel 1 above it with the fastening flange 8 end of the panel 1 securely located by that panel 1 whilst the bottom end 5 of the panel 1 is anchored by the flange 8 of the panel 1 below through the recess to flange association described above and the rib to groove recess inter association and the front lip or stepped arrangement described also above. In such circumstances the panels 1 all in a stack 100 are robustly integrated to present an almost continuous layer of insulation material 7 in the cavities 6 of each panel 1 with only limited conductive paths provided by the abutting end or edges 4, 5 of the panels 1.

As will be described later each panel 1 will be added to the stack of the assembly 100 from the base upward normally from an initial starter or base rail trim which emulates the top end 4 of a panel 1 without the cavity 6 and so insulation material 7 below. If the ends or edges 4, 5 of panels 1 are detachable then one of these top ends or edges 4 may form the starter or base rail trim to initiate a stack assembly 100 and another a bottom end or edge 5 used to terminate the stack 100 as required. In such circumstances although described as top 4 and bottom 5 edges and ends in a panel 1 in use these ends 4, 5 may be above or below each other in an assembled stack 100 of panels secured to a wall. Once secured to a wall the stack 100 of side-by-side panels 1 it will be understood that the insulation of that building or structure is greatly increased.

As indicated above the panels 1 will be stacked upwards one upon the other as required. The panels 1 once assembled will be expected to remain in position for a number of years and through weather seasons so will be designed with this in mind. However, there may be instances where maintenance is required so in accordance with aspects of the present invention the panels 1 can be removed one at a time from the up down or possibly only the front part 1a removed to expose the insulation 7 filling to the cavity 6. The insulation material filling 7 may remain in position located by the elements 15 or be removed/replaced to expose the rear panel part 1b. If the panel 1 is formed integrally then the parts 1a, 1b as depicted could not be separated but the whole panel could be removed to expose the building for maintenance and development. The ability to remove panels also will allow alternative decorative fronts and textures to be provided.

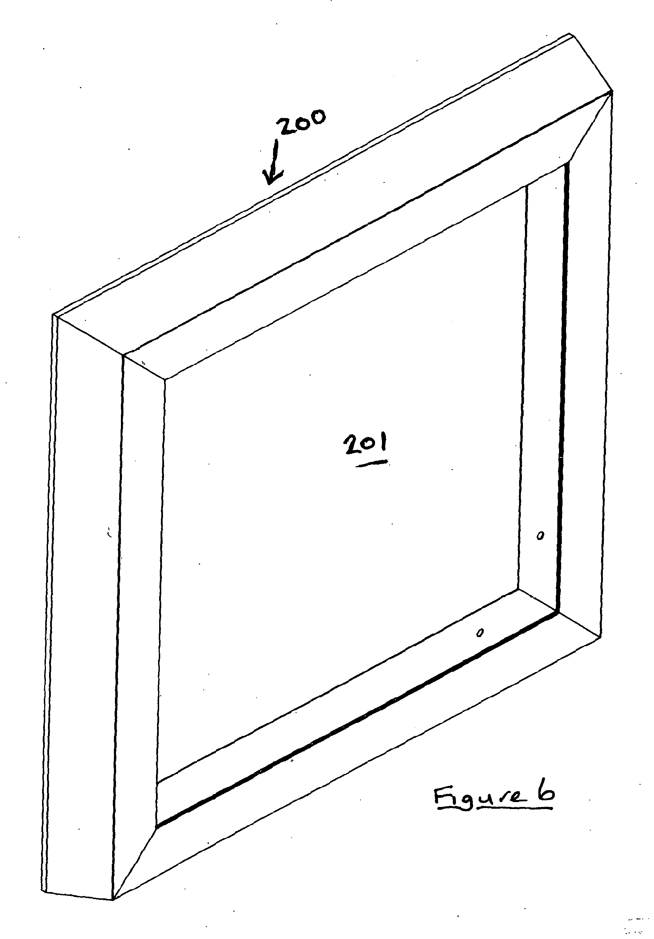

Within a building or structure there are likely to be windows and doors so as depicted in figure 6 normally a trimming frame 200 will be provided around a window 201 to close ends of the cavities 6 in the respective panels (not shown). The trimming frame 200 will create effectively a box around the window 201 with the depth of insulation material extending up to that box.

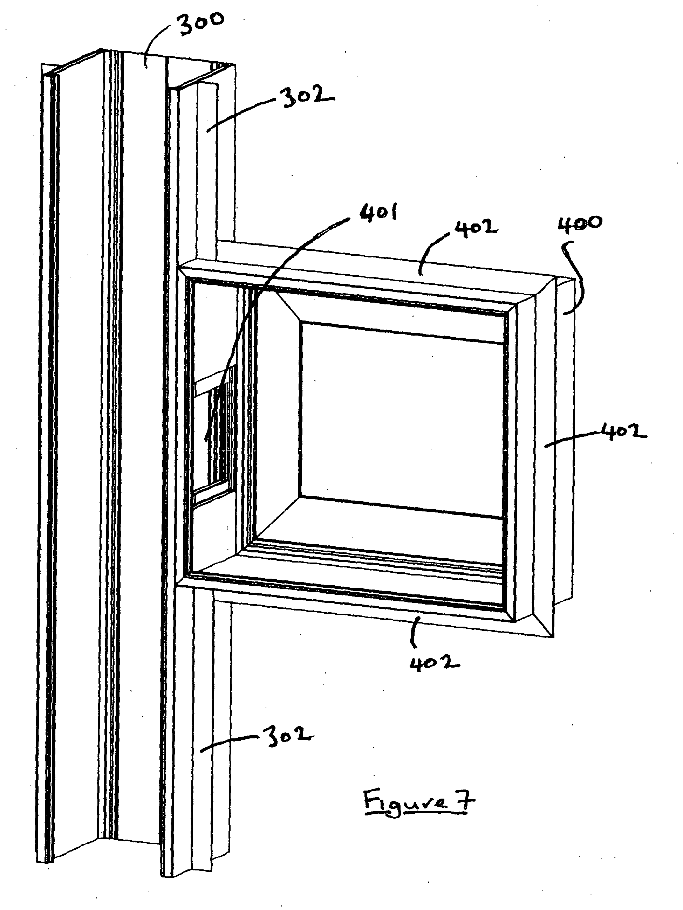

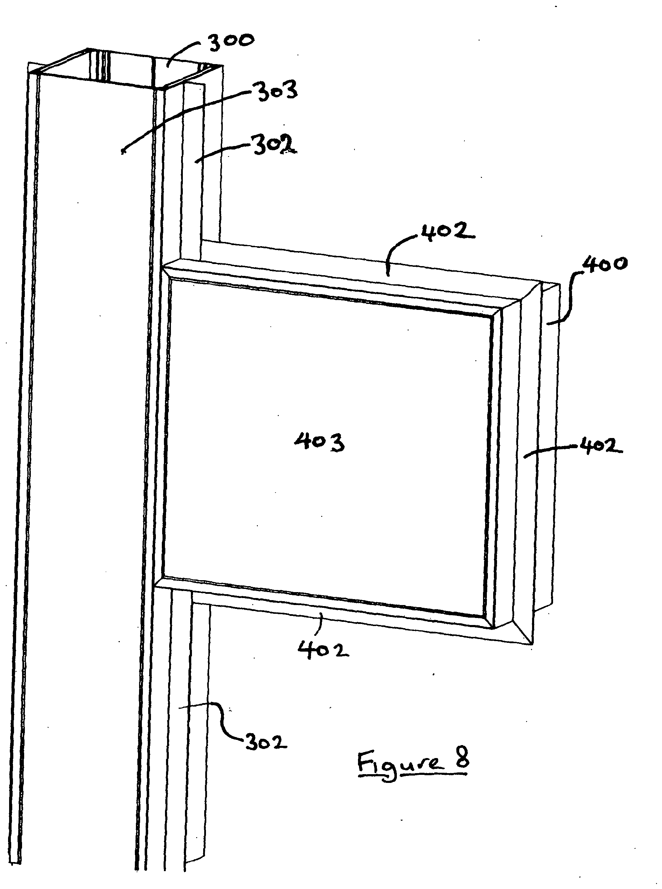

Within a building or structure there are likely to be such features as a soil vent pipe and outflow pipes so as illustrated in figure 7 and figure 8 aspects of the present invention provide a channel 300 like structure to accommodate such pipes (not shown) and a box 400 like structure similar to that used around windows to accommodate such features as outflow pipes (not shown). Within the box 400 is an aperture 401 for through pipe work to a junction to the downpipe. The channel 300 and the box 400 have a frame which overlays with a skirt 302, 402 the insulation panels so that as side parts of the box and the channel abut against the ends of the panels to close the cavities with a neat and more important weather resistant bead provided to the arrangement. The box 400 as illustrated in figure 8 may be covered with a lid 403 whilst the channel 300 may be covered with a strip 303. The lid 403 and the strip 303 may be insulated to provide insulation within the stack and for the building clad by the stack.

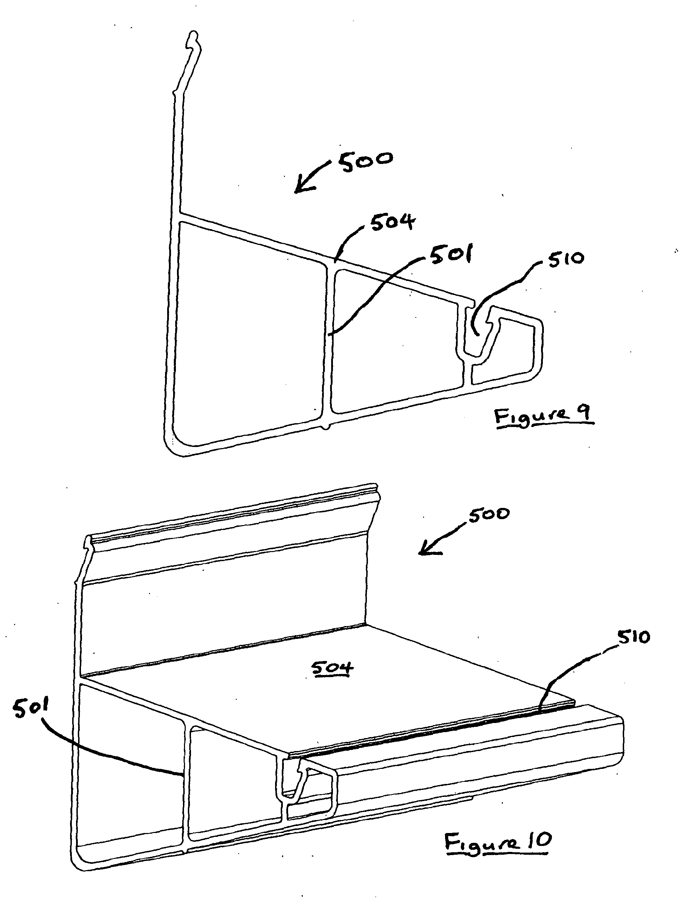

As outlined above insulation panels in accordance with aspects of the present invention are present in a stack from a base or ground up. In such circumstances the first row of insulation panels must be secured so that the bottom end or edge of the first layer of panels must be securely located; it will be appreciated that the top part of the panel will be secured by hanging from the fastening flange. Figure 9 and figure 10 depict a base or bottom retainer trim 500 for an insulation stack in accordance with aspects of the present invention.

The trim 500 is robust and again formed by extrusion or mounding or similar process with reinforcing elements 501 for strength. The upper part 504 of the trim 500 emulates that of a top end or edge of an insulation panel and so is reciprocally shaped to that of the top and bottom ends or edges of panels. Thus when a panel is located on the trim 500 there is surface to surface abutment with normally a slope upwards from the front to the rear side of the panel. The trim 500 is secured with fasteners as with panels along and through a fastening flange. Towards the front side of the trim a grip recess 510 is provided like that as in an insulation panel to locate and secure that part of the panel in use.

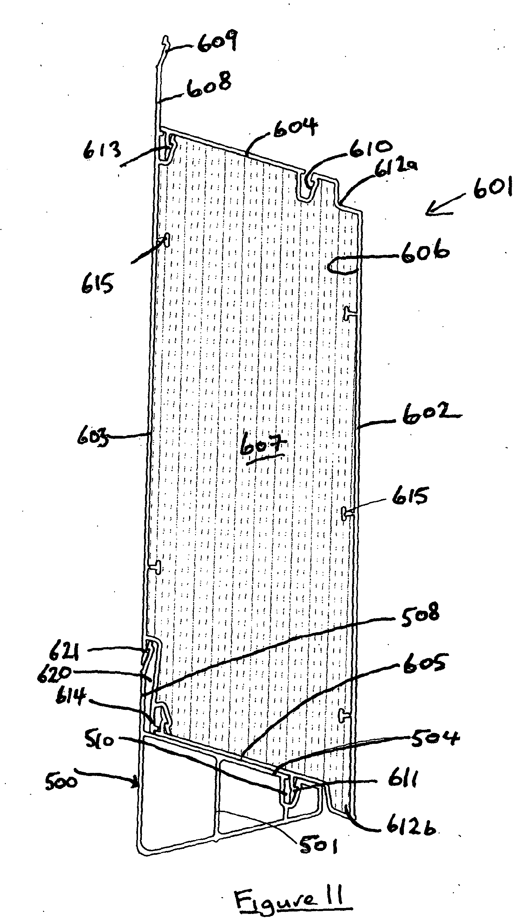

Figure 11 shows a cross-section of a base retainer trim 500 as depicted in figures 9 and 10 secured to a first row of insulation panels 600 (references are similar to previously incremented by 600 in each case) with insulation material 607 in the cavity 606 of the panel 601. As can be seen the panel 601 is secured as with a panel to panel association as described above due the shaping and reciprocal configuration of the upper part 504 of the trim 500 to that of an upper edge or end 604 of a panel 601. A main need for the trim 500 is to provide fixing and stabilisation of the lower or bottom part of the panel 601. In such circumstances as described previously the flange 508 of the trim 500 is located with a rear recess 620 of the panel 601 and a rib or strip 611 engages the grip recess 510 of the trim 500.

## Claims

1. An insulation panel (1) for a building or structure, the panel comprising a cavity (6) between a front surface (2) and a rear surface (3) with a top edge (4) and a bottom edge (5), the rear surface extending beyond the top edge in use substantially in a contiguous plane with the rear surface (3) to define a fastening flange (8) for securing the panel to a surface to be insulated, the top edge (4) and the bottom edge (5) are reciprocally shaped to each other and downwardly angled away from the rear surface (3) for keyed abutment upon a lip (12) and of step keying features (10, 11) with inclined abutment surfaces between two adjacent insulation panels (1) in use side by side and one upon the other, the fastening flange (8) configured with sufficient width to provide that each panel in use hangs down against the surface to be insulated in use and below the flange there is forced abutment between the abutment surfaces of the top edge (4) and bottom edge (5) of the side by side panels in use, the forced abutment locked by the keying features (10, 11) of one panel (1) on its flange (8) upon the abutment surface of the panel below such that in use the adjacent insulation panels are aligned in a desired correct and precise manner, wherein the front panel surface (2) comprises the lip (12) stepped in a front most configuration (12) to act in use as a wet and/or weather lip under the forced abutment of the top edge (4) and the bottom edge (5), wherein a lip or step (12b) extends beyond the lower edge (5) and a shaping (12a) is located in the top edge (4);
the lower part of the rear surface (3) has a recess (20) which includes a clip like arrangement (21) for engaging in use the end portion (9) of the flange (8); the panel being **characterised in that** the top edge comprises a recess (10) and the bottom edge (5) comprises a strip or rail (11) thereby forming inter-engaging keying features in use.

2. An insulation panel as claimed in claim 1 wherein the cavity is substantially filled with a stable insulation material (7).

3. An insulation panel as claimed in claim 1 or claim 2 wherein the front surface (2) and the rear surface (3) are separable.

4. An insulation panel as claimed in any preceding claim wherein the fastening flange (8) has a width sufficient to orient and present the panel against a flat surface, in use, by a cantilever effect when fastened to that surface.

5. An insulation panel as claimed in any preceding claim wherein the fastening flange (8) has a thickness greater than that of the rear surface (3).

6. An insulation panel as claimed in any preceding claim wherein the top edge (4) and the bottom edge (5) are at substantially consistent angles to the plane of the front surface (2) and the rear surface (3).

7. An insulation panel as claimed in any preceding claim wherein the top edge (4) and the bottom edge (5) are reciprocally shaped respectively concave and convex to each other.

8. An insulation panel as claimed in any preceding claim wherein the top edge (4) and/or the bottom edge (5) of the insulation panel (1) are formed from detachable elements.

9. An insulation panel as claimed in any preceding claim wherein the rear surface (3) includes channels or grooves on the outer surface.

10. An insulation panel assembly (100) comprising a plurality of panels (1) as claimed in any proceeding claim with a respective bottom edge (5) and a top edge (4) in adjacent side-by-side panels (1) in the assembly (100) substantially abutting each other.

11. A method of forming an insulation panel as claimed in claims 1 to 9 wherein:-
a) the panel (1) is formed with the cavity (6) between the front surface (2) and the rear surface (3) by a forming process;
b) The cavity (6) is closed whereby an insulation material (7) such as foam is injected or located into the cavity (6) to provide insulation and/or further structural strength to the panel (1) by constraint in the cavity; and,
c) The panel (1) is fitted or shaped to ensure the cavity remains closed.

12. A method of providing an insulation surface to a building using insulation panels (1) as claimed in any of claims 1 to 9 in which:
a) A retainer strip (500) is secured to the building by appropriate means;
b) A first insulation panel (1) is located above the retainer strip (500) so that the bottom edge (5) engages and abuts the retainer strip (500) and the fastening flange (8) secured to the building by appropriate means;
c) A further insulation panel (1) is locate with a bottom edge (5) engaging and abutting a top edge (4) of the first insulation panel (1) below and the fastening flange (8) secured to the building by appropriate means; and,
d) Further insulation panels (1) installed as required with associated bottom edge (5) to top edge (4) abutment in a stack with respective fastening flanges (8) secured to the building.

## Patentansprüche

1. Isolationstafel (1) zum Bauen einer Struktur, wobei die Tafel einen Hohlraum (6) zwischen einer vorderen Fläche (2) und einer hinteren Fläche (3) mit einer Oberkante (4) und einer Unterkante (5) umfasst, wobei sich die hintere Fläche über die Oberkante hinaus erstreckt, die im Wesentlichen in einer durchgehenden Ebene mit der hinteren Fläche (3) in Verwendung steht, um einen Befestigungsflansch (8) zum Sichern der Tafel an einer zu isolierenden Fläche zu definieren, wobei die Oberkante (4) und die Unterkante (5) wechselseitig aneinander geformt und nach unten von der hinteren Fläche (3) hinweg zum verkeilten Anschlagen an einen Ansatz (12) angewinkelt sind, und die aus stufenweisen Sperrmerkmalen (10, 11) mit geneigten Anschlagflächen zwischen zwei benachbarten Isolationstafeln (1) besteht, die nebeneinanderliegend und eine auf der anderen in Verwendung stehen, wobei der Befestigungsflansch (8) mit ausreichender Breite konfiguriert ist, um sicherzustellen, dass jede verwendete Tafel gegen die Fläche herabhängt, um in Verwendung isoliert zu sein und wobei es unter dem Flansch zwischen den Anschlagflächen der Oberkante (4) und der Unterkante (5) der nebeneinanderliegenden Tafeln in Verwendung erzwungenen Anschlag gibt, wobei der erzwungene Anschlag durch die Sperrmerkmale (10, 11) von einer Tafel (1) auf ihrem Flansch (8) auf der Anschlagfläche der Tafel darunter derart gesperrt ist, dass die benachbarten Isolationstafeln in Verwendung auf eine gewünschte korrekte und präzise Weise ausgerichtet sind, wobei die vordere Tafelfläche (2) den Ansatz (12) umfasst, der in einer vordersten Konfiguration (12) abgestuft ist, um in Verwendung als ein Nässe- und/oder Wetteransatz unter dem erzwungenen Ansatz der Oberkante (4) und der Unterkante (5) zu dienen, wobei sich ein Ansatz oder eine Stufe (12b) über die Unterkante (5) hinaus erstreckt und sich eine Ausformung (12a) in der Oberkante (4) befindet;
wobei der untere Teil der hinteren Fläche (3) eine Vertiefung (20) aufweist, die eine Clip-ähnliche Anordnung (21) zum Eingreifen in den Endabschnitt (9) des Flansches (8) in Verwendung beinhaltet;
wobei die Tafel **dadurch gekennzeichnet ist, dass** die obere Kante eine Vertiefung (10) umfasst und dass die Unterkante (5) einen Streifen oder eine Schiene (11) umfasst und somit ineinandergreifende Sperrmerkmale in Verwendung bildet.

2. Isolationstafel nach Anspruch 1, wobei der Hohlraum im Wesentlichen mit einem stabilen Isolationsmaterial (7) gefüllt ist.

3. Isolationstafel nach Anspruch 1 oder Anspruch 2, wobei die vordere Fläche (2) und die hintere Fläche (3) trennbar sind.

4. Isolationsfläche nach einem der vorhergehenden Ansprüche, wobei der Befestigungsflansch (8) eine Breite aufweist, die ausreichend ist, um die Tafel gegen eine flache Fläche in Verwendung durch einen Auslegereffekt auszurichten und darzulegen, wenn sie an dieser Fläche befestigt ist.

5. Isolationstafel nach einem der vorhergehenden Ansprüche, wobei der Befestigungsflansch (8) eine Dicke aufweist, die größer ist als die der hinteren Fläche (3).

6. Isolationstafel nach einem der vorhergehenden Ansprüche, wobei die Oberkante (4) und die Unterkante (5) im Wesentlichen in einheitlichen Winkeln zu der Ebene der vorderen Fläche (2) und der hinteren Fläche (3) stehen.

7. Isolationstafel nach einem der vorhergehenden Ansprüche, wobei die Oberkante (4) und die Unterkante (5) wechselseitig konkav bzw. konvex zueinander geformt sind.

8. Isolationstafel nach einem der vorhergehenden Ansprüche, wobei die Oberkante (4) und/oder die Unterkante (5) der Isolationstafel (1) wechselseitig aus trennbaren Elementen gebildet sind.

9. Isolationstafel nach einem der vorhergehenden Ansprüche, wobei die hintere Fläche (3) Kanäle oder Nuten auf der äußeren Fläche beinhaltet.

10. Isolationstafelbaugruppe (100), die eine Vielzahl von Tafeln (1) nach einem der vorhergehenden Ansprüche umfasst, wobei eine jeweilige Unterkante (5) und eine Oberkante (4) in benachbarten nebeneinanderliegenden Tafeln (1) in der Baugruppe (100) im Wesentlichen aneinander anstoßen.

11. Verfahren zum Bilden einer Isolationstafel nach den Ansprüchen 1 bis 9, wobei:
a) die Tafel (1) mit dem Hohlraum (6) zwischen der vorderen Fläche (2) und der hinteren Fläche (3) durch einen Bildungsprozess gebildet ist;
b) der Hohlraum (6) geschlossen ist, wobei ein Isolationsmaterial (7) wie etwa Schaum in den Hohlraum (6) eingespritzt oder darin platziert wird, um der Tafel (1) durch Beschränkung in dem Hohlraum Isolation und/oder weitere strukturelle Stärke bereitzustellen; und,
c) die Tafel (1) angepasst oder geformt ist, um sicherzustellen, dass der Hohlraum geschlossen bleibt.

12. Verfahren zum Bereitstellen einer Isolationsfläche an ein Gebäude unter Verwendung von Isolationstafeln (1) nach einem der Ansprüche 1 bis 9, in welchem:
a) ein Rückhaltestreifen (500) durch geeignete Mittel an dem Gebäude angebracht wird;
b) eine erste Isolationstafel (1) derart über dem Rückhaltestreifen (500) liegt, dass die Unterkante (5) in den Rückhaltestreifen (500) und den Befestigungsflansch (8), die durch geeignete Mittel an dem Gebäude angebracht sind, eingreift und anstößt;
c) eine weitere Isolationstafel (1) mit einer Bodenkante (5) in Eingriff mit einer Oberkante (4) der ersten Isolationstafel (1) darunter und dem Befestigungsflansch (8), der durch geeignete Mittel an dem Gebäude angebracht ist, stehend und daran anstoßend liegt; und
d) weitere Isolationstafeln (1) wie benötigt mit Anschlag zugehöriger Unterkante (5) an Oberkante (4) in einem Stapel mit entsprechenden Befestigungsflanschen (8), die an dem Gebäude angebracht sind, installiert sind.

## Revendications

1. Panneau isolant (1) pour un bâtiment ou une structure, le panneau comprenant une cavité (6) entre une surface avant (2) et une surface arrière (3) avec un bord supérieur (4) et un bord inférieur (5), le surface arrière s'étendant au-delà du bord supérieur en service sensiblement dans un plan contigu à la surface arrière (3) pour définir une bride de fixation (8) permettant de fixer le panneau à une surface à isoler, le bord supérieur (4) et le bord inférieur (5) étant mutuellement formés l'un par rapport à l'autre et inclinés vers le bas depuis la surface arrière (3) pour une butée de calage sur une lèvre (12) et des éléments de calage échelonnés (10, 11) avec des surfaces de butée inclinées entre deux panneaux isolants adjacents (1) en service côte à côte et l'un sur l'autre, la bride de fixation (8) étant conçue avec une largeur suffisante pour faire en sorte que chaque panneau en service pend contre la surface à isoler en service et que sous la bride il existe une butée forcée entre les surfaces de butée du bord supérieur (4) et du bord inférieur (5) des panneaux côte à côte en service, la butée forcée étant bloquée par les éléments de calage (10, 11) d'un panneau (1) sur sa bride (8) sur la surface de butée du panneau en dessous de telle sorte qu'en service les panneaux isolants adjacents sont alignés d'une manière précise et appropriée, dans lequel la surface de panneau avant (2) comprend la lèvre (12) échelonnée dans une configuration la plus en avant (12) pour agir en service en tant que lèvre humide et/ou météorologique sous la butée forcée du bord supérieur (4) et du bord inférieur (5), dans lequel une lèvre ou une marche (12b) s'étend au-delà du bord inférieur (5) et un façonnage (12a) est situé dans le bord supérieur (4) ;
la partie inférieure de la surface arrière (3) comporte un évidement (20) qui comprend un agencement de type pince (21) permettant de mettre en prise en service la partie d'extrémité (9) de la bride (8) ;
le panneau étant **caractérisé en ce que** le bord supérieur comprend un évidement (10) et le bord inférieur (5) comprend une bande ou un rail (11) formant ainsi des caractéristiques de calage en prise mutuelle en service.

2. Panneau isolant selon la revendication 1, dans lequel la cavité est sensiblement remplie d'un matériau isolant stable (7).

3. Panneau isolant selon la revendication 1 ou la revendication 2, dans lequel la surface avant (2) et la surface arrière (3) sont séparables.

4. Panneau isolant selon une quelconque revendication précédente, dans lequel la bride de fixation (8) a une largeur suffisante pour orienter et présenter le panneau contre une surface plate, en service, par un effet de levier lorsqu'il est fixé à cette surface.

5. Panneau isolant selon une quelconque revendication précédente, dans lequel la bride de fixation (8) a une largeur supérieure à celle de la surface arrière (3).

6. Panneau isolant selon une quelconque revendication précédente, dans lequel le bord supérieur (4) et le bord inférieur (5) sont à des angles sensiblement constants par rapport au plan de la surface avant (2) et de la surface arrière (3).

7. Panneau isolant selon une quelconque revendication précédente, dans lequel le bord supérieur (4) et le bord inférieur (5) sont mutuellement formés respectivement de manière concave et convexe l'un par rapport à l'autre.

8. Panneau isolant selon une quelconque revendication précédente, dans lequel le bord supérieur (4) et/ou le bord inférieur (5) du panneau isolant (1) sont formés à partir d'éléments détachables.

9. Panneau isolant selon une quelconque revendication précédente, dans lequel la surface arrière (3) comprend des canaux ou des rainures sur la surface extérieure.

10. Ensemble de panneau isolant (100) comprenant une pluralité de panneaux (1) selon une quelconque revendication précédente, avec un bord inférieur (5) et un bord supérieur (4) respectifs dans des panneaux adjacents côte à côte (1) dans l'ensemble (100) sensiblement en butée l'un contre l'autre.

11. Procédé de formation d'un panneau isolant selon les revendications 1 à 9, dans lequel :
a) le panneau (1) est formé avec la cavité (6) entre la surface avant (2) et la surface arrière (3) par un processus de formation ;
b) La cavité (6) est fermée de sorte qu'un matériau isolant (7) tel qu'une mousse est injecté ou placé dans la cavité (6) pour fournir une isolation et/ou une résistance structurale supplémentaire au panneau (1) par contrainte dans la cavité ; et,
c) Le panneau (1) est ajusté ou façonné pour assurer que la cavité reste fermée.

12. Procédé de fourniture d'une surface isolante à un bâtiment en utilisant des panneaux isolants (1) selon l'une quelconque des revendications 1 à 9, dans lequel :
a) Une bande de retenue (500) est fixée au bâtiment par des moyens appropriés ;
b) Un premier panneau isolant (1) est situé au-dessus de la bande de retenue (500) de sorte que le bord inférieur (5) vient en prise avec et bute contre la bande de retenue (500), et la bride de fixation (8) est fixée au bâtiment par des moyens appropriés ;
c) Un autre panneau isolant (1) est situé avec un bord inférieur (5) venant en prise avec et butant contre un bord supérieur (4) du premier panneau isolant (1) en dessous, et la bride de fixation (8) est fixée au bâtiment par des moyens appropriés ; et,
d) D'autres panneaux isolants (1) installés, selon les besoins, avec une butée associée du bord inférieur (5) contre le bord supérieur (4) en une pile avec des brides de fixation (8) respectifs fixés au bâtiment.
